(19) Europäisches Patentamt
European Patent Office
Office européen des brevets

(11) EP 0 892 929 B1

(12) EUROPÄISCHE PATENTSCHRIFT

(45) Veröffentlichungstag und Bekanntmachung des Hinweises auf die Patenterteilung:
13.11.2002 Patentblatt 2002/46

(51) Int Cl.7: G01S 17/42

(21) Anmeldenummer: 97916460.5

(86) Internationale Anmeldenummer:
PCT/EP97/01783

(22) Anmeldetag: 10.04.1997

(87) Internationale Veröffentlichungsnummer:
WO 97/038327 (16.10.1997 Gazette 1997/44)

(54) **ANORDNUNG ZUR VERMESSUNG DER KOORDINATEN MEHRERER, AN EINEM OBJEKT ANGEBRACHTEN, RETROREFLEKTOREN**

DEVICE FOR MEASURING THE CO-ORDINATES OF SEVERAL RETROREFLECTORS APPLIED ON AN OBJECT

DISPOSITIF DE MESURE DES COORDONNEES DE PLUSIEURS RETROREFLECTEURS APPOSES SUR UN OBJET

(84) Benannte Vertragsstaaten:
AT BE CH DE FR GB LI NL SE

(30) Priorität: 10.04.1996 DE 19614108

(43) Veröffentlichungstag der Anmeldung:
27.01.1999 Patentblatt 1999/04

(73) Patentinhaber: FRAUNHOFER-GESELLSCHAFT ZUR FÖRDERUNG DER ANGEWANDTEN FORSCHUNG E.V.
80636 München (DE)

(72) Erfinder: HARTRUMPF, Matthias
D-76135 Karlsruhe (DE)

(74) Vertreter: Rösler, Uwe, Dipl.-Phys.
Rösler Patentanwaltskanzlei
Landsberger Strasse 480a
81241 München (DE)

(56) Entgegenhaltungen:
WO-A-91/09325           GB-A- 2 285 550
US-A- 4 123 165         US-A- 4 736 247
US-A- 4 763 361

## Beschreibung

Die Erfindung betrifft eine Anordnung zur Vermessung der Koordinaten eines oder mehrerer, an einem Objekt angebrachten Retroreflektor(en) gemäß dem Oberbegriff des Anspruchs 1.

## Stand der Technik

Zur optischen Koordinaten-Bestimmung wurde eine Vielzahl von Verfahren entwickelt, die darauf basieren, daß das Objekt optisch markiert und die Position der optischen Markierung von einem oder mehreren Referenzpunkten aus bestimmt wird.

Sie können nach der Art der Markierung in zwei Verfahrensklassen eingeteilt werden:

A. Verfahren, bei denen die Markierung ausschließlich optisch erfolgt (s. Offenlegungsschrift DE 4325542). Das Meßobjekt muß nicht besonders präpariert werden. Ein Lichtstrahl mit bekanntem Strahlverlauf beleuchtet das Objekt und wird an der Objektoberfläche gestreut. Die streuende Objektoberfläche stellt die Markierung dar und wird auf einen positionsauflösenden oder bildgebenden Sensor abgebildet. Charakteristisch für diese Verfahren ist, daß die beleuchtete Oberfläche des Meßobjekts auf den Sensor abgebildet werden muß. Bei reflektierenden Objekten kann in der Regel keine Vermessung erfolgen, da nur bei einer ausgezeichneten Winkelstellung von Detektor, Beleuchtung und Objektoberfläche zueinander, Strahlung auf den Detektor fällt. Retroreflektierende Objekte können prinzipiell nicht vermessen werden, da der beleuchtende Strahlengang an ihnen in sich zurückreflektiert wird.

B. Verfahren zur Vermessung optisch ausgezeichneter Punkte.
Bei ihnen wird - sofern das Objekt selbst nicht die besondere optische Eigenschaft aufweist - am oder im zu vermessenden Objektpunkt eine besondere Markierung angebracht.
Gebräuchliche Markierungen sind:

1. Selbstleuchtende Marken (s. SELCOM Firmenschrift: "Precision non-contact measurement is simpler than you think").
2. Im verwendeten Spektralbereich (relativ zur Umgebung) effektiv streuende Marken.
3. Retroreflektoren (s. Europäische Patentschrift EP 0405423 B1, KERN Firmenschrift: SMART31 0).

Die Vermessung nach A. und die Vermessung der Markierungen 1 und 2 erfolgt über eine Abbildung der leuchtenden bzw. beleuchteten Objekt- oder Markenoberfläche auf positionsauflösende bzw. bildgebende Sensoren. Für diese Verfahren muß zwischen der Marke und dem Objekt eine abbildende Optik eingesetzt werden. Dadurch können folgende Probleme auftreten:

- Probleme durch einen begrenzten Schärfentiefebereich bzw. Notwendigkeit der Fokussierung
- Verfälschung der Messung durch Abbildungsfehler, mangelnden Kontrast bzw. spiegelnde Oberflächen im Meßfeld.

Bei Meßsystemen nach B.1., muß an jedem interessierenden Objektpunkt ein selbstleuchtendes Element befestigt werden. Das Element muß den umgebenden Raum so ausleuchten, daß genügend Licht auf den Sensor trifft, so daß das Bild des Elements in der Sensorebene deutlich von der Umgebung unterschieden werden kann. Dazu muß das Element mit Energie versorgt werden. Das bedeutet, daß entweder ein Energieträger angebracht werden muß - und die Baugröße des Elements relativ groß wird - oder Versorgungskabel zum Objekt verlegt werden müssen. Der Aufwand bei der Anbringung an einem Meßobjekt ist deshalb relativ groß.

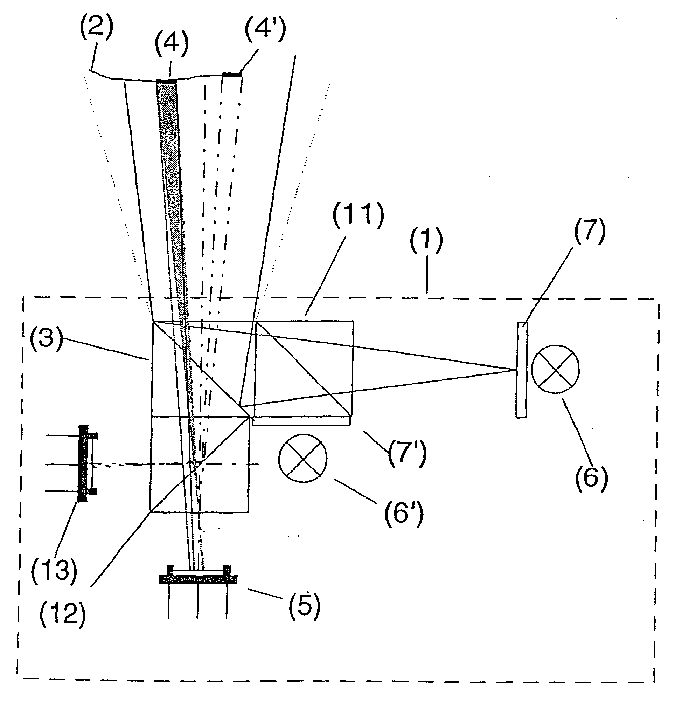

Für die Verfahren, die auf der Abbildung einer streuenden Marke beruhen, muß der Kontrast zwischen dem Bild der Umgebung und dem Abbild der Marke durch eine entsprechend intensive bzw. selektive Ausleuchtung des Meßvolumens erreicht werden. Sofern spiegelnde oder glänzende Oberflächen im Meßfeld vorhanden sind, können mit dieser Art der Messung unter Umständen erhebliche Meßfehler auftreten. Ferner ist die starke Ausleuchtung des Meßvolumens oft nur durch einen relativ großen Energieaufwand erreichbar.

Sehr effizient sind dagegen die Verfahren, die auf der Peilung eines Retroreflektors beruhen, da dieser nahezu das gesamte auf ihn treffende Licht in sich bzw. parallelversetzt reflektiert. Im Unterschied zu den oben genannten Verfahren beruhen sie nicht auf einer Abbildung der Objekt- bzw. Markenoberfläche, sondern auf einer Peilung des Retroreflektor-Zentrums mit einem Laserstrahl. Von der Meßposition aus wird er auf den Retroreflektor ausgerichtet. Kennzeichnend für diese Verfahren ist, daß die Position des Reflektors aus der Winkelstellung des Lasers ermittelt wird. Die in diesen Verfahren eingesetzten optischen Sensoren werden ausschließlich zur Minimierung oder Kompensation von Peilfehlern eingesetzt: wird das Zentrum des Retroreflektor vom Laserstrahl getroffen, so wird der Strahl in sich zurückreflektiert, andernfalls wird der Strahl parallelversetzt zurückreflektiert. Mit den optischen Sensoren wird dieser Parallelversatz des Strahls am Retroreflektor gemessen und daraus der Peilfehler bestimmt. Dazu ist es zwingend erforderlich, daß die Fläche des Laserstrahls an der Meßposition kleiner als die effektive Fläche des Retroreflektors ist. Andernfalls würde stets die gleiche Lichtfleck-Position in der Sensorebene vermessen und die Wirkung des Retroreflektors würde lediglich darin bestehen, daß dieser Lichtfleck gegenüber dem einfallenden Fleck (um die Fleckachse) verdreht ist.

Kennzeichnend für diese Verfahren ist daher, daß der Strahlquerschnitt des Laserstrahls an der Meßposition kleiner (üblicherweise <10%) der Querschnittsfläche des Retroreflektors ist. Weiteres Kennzeichen dieser Meßverfahren ist die Bestimmung der Reflektorkoordinaten über die Messung der Peilwinkel, die entsprechend genau eingestellt und bestimmt werden müssen. Die Meßsysteme enthalten in der Regel eine hochpräzise - und entsprechend teure bzw. wartungsintensive - Mechanik. Ein weiteres Problem stellt unter Umständen die Ausrichtung des Laserstrahls auf den Retroreflektor dar, die zumindest zu Beginn einer Meßreihe - in der Regel manuell - vorgenommen werden muß. In einem großen Meßfeld ist dieses "Einfangen" des Strahls unter Umständen sehr kritisch und mit einem erheblichen Zeitaufwand verbunden.

Aus der WO 91/09325 geht eine Vorrichtung zur Lageerfassung eines Objektes hervor, die zu Zwekken der Durchführung eines Ankoppelmanövers zweier Raumfahrzeuge konzipiert worden ist. Die Vorrichtung weist wenigstens drei Retroreflektoren auf, die von einem Lichtstrahl beleuchtet werden, sofern die Lichtquelle genügend weit vom Ort der Reflektoren beabstandet ist. Die Lichtquelle befindet sich am ersten Raumfahrzeug, die Retroreflektoren am zweiten Raumfahrzeug, beide Raumfahrzeuge nähern sich zur Kopplung einander an. Ferner sieht das zweite Raumfahrzeug einen sphärisch gekrümmten Spiegel vor, der als Retroreflektor dient, haben beide Raumfahrzeuge einen gewissen Mindestabstand unterschritten. Die von den retroreflektierenden Flächen am zweiten Raumfahrzeug zurückgeworfenen Lichtstrahlen passieren einen Strahlteiler, dem ein Lichtdetektor in Form einer CCD-Kamera nachgeordnet ist. Die genaue Lageerfassung des zweiten Raumfahrzeuges relativ zum ersten Raumfahrzeug erfolgt durch Auswertung von Reflexionsereignissen an wenigstens drei Reftroreflektoren, die jeweils an drei räumlich unterschiedlichen Orten angebracht sind. Ist der gegenseitige Abstand der zwei sich annähernden Raumschiffen geringer als der obenbezeichnete Mindestabstand, so ist es erforderlich zwei weitere Lichtquellen zu aktivieren, um wiederum drei Reflexionsereignisse - nun jedoch auf der Oberfläche des sphärischen Spiegels - entsprechend auswerten zu können.

**Darstellung der Erfindung**

Die Aufgabe der Erfindung ist es eine Anordnung zur Vermessung der Koordinaten mindestens eines, an einem Objekt angebrachten Retroreflektors, derart anzugeben, dass der technische Aufwand zur genauen Messwerterfassung reduziert werden soll, bei einer gleichbleibenden oder gar verbesserten Messdatenqualität.

Die Lösung der der Erfindung zugrundeliegenden Aufgabe ist im Anspruch 1 angeben. Vorteilhafte Weiterbildungen des Erfindungsgedankens sind Gegenstand der Unteransprüche.

Erfindungsgemäß ist eine Anordnung gemäß dem Oberbegriff des Anspruchs 1 derart weitergebildet, daß sich die Detektoreinheit außerhalb eines Punktes P' befindet, der einem, der Pupille der Beleuchtungseinheit entsprechenden Punkt im Strahlengang des vom Retroreflektor zurückgeworfenen Lichts entspricht, wo sich die Position und/oder Form des detektierten Lichtflecks mit der Position des Retroreflektors ändert, und daß die Beleuchtungseinheit aus zwei oder mehreren Lichtquellen mit unterschiedlicher Pupillenlage besteht, die zeitlich abwechselnd betätigbar sind und/oder in der spektralen Zusammensetzung oder im Polarisationszustand unterschiedliches Licht emittieren.

Die Erfindung beruht darauf, daß das von einer Beleuchtungseinheit ausgehende Licht, das auf eine retroreflektierende Marke fällt, in sich zurückreflektiert wird und mit Hilfe eines vor der Beleuchtungseinheit angebrachten, Strahlteilers teilweise auf einen Detektor gelenkt wird, wobei der Detektor außerhalb des Punktes P', welcher der Pupille der Beleuchtung entspricht, angeordnet ist, wodurch eine Bestimmung der Markenposition im Koordinatensystem der Beleuchtungs- / Detektoreinheit möglich wird.

Im Gegensatz zum Stand der Technik muß die Beleuchtungs- / Detektoreinheit für diese Bestimmung nicht genau auf das Zentrum des Reflektors ausgerichtet werden. Die Messung der Reflektor-Koordinaten kann direkt, d.h. ohne Bestimmung von Peilwinkeln, aus der Vermessung der Koordinaten des in der Sensorebene resultierenden Lichtflecks erfolgen. Im Gegensatz zu den Verfahren mit aktiven oder streuenden Marken, ist dies bereits ohne die Verwendung abbildender optischer Elemente möglich.

Mit einer erfindungsgemäßen Anordnung kann auf einfache Weise eine kontaktlose Vermessung eines oder mehrerer Objektpunkte erfolgen. Dazu ist lediglich an den Objektpunkten eine retroreflektierende Marke (beispielsweise eine retroreflektierende Folie) anzubringen. Es entfällt damit die Notwendigkeit am Objekt ein selbstleuchtendes Element mit Stromversorgung bzw. Stromzuführung anzubringen. Im Gegensatz zu den auf Peilung beruhenden Verfahren, bei denen der Retroreflektordurchmesser erheblich größer als der maximale Laserstrahlquerschnitt im Meßvolumen sein muß, kann die Marke klein und damit leicht sein. Die Vermessung der Bahnbewegung eines kleinen, schnellen Objekts wird unter Umständen erst dadurch möglich.

Der Meßkopf muß nicht hochpräzise auf den Reflektor ausgerichtet werden. Die damit verbundenen Probleme sind mit einer erfindungsgemäßen Anordnung nicht mehr vorhanden.

Da vom Meßprinzip her keine abbildenden optischen Elemente wie Linsen (die zu einer Schwächung der auf den Sensor treffenden Strahlung führen könnten) erforderlich sind und am Retroreflektor selbst nahezu das gesamte auffallende Licht zurückreflektiert wird, ist der Strahlengang sehr effizient, d.h. selbst für einen Sensor mit einem Meßbereich von mehreren Dezimetern bis Metern (senkrecht zur optischen Achse) kann die Beleuchtung bereits mittels einer Leuchtdiode (LED) erfolgen. Dadurch wird eine hochfrequente Messung mit Fremdlichtkompensation ermöglicht. Bei Verwendung einer positionsempfindlichen Fotodiode (PSD) als Sensor und einer modulierten LED können Meßfrequenzen im Bereich MHz und eine extreme Störlichtunterdrückung erreicht werden.

Werden bildgebende Sensoren eingesetzt oder die Abbildung visuell oder fotografisch ausgewertet, können gleichzeitig mehrere Objektpunkte vermessen oder erfaßt werden.

Da keine Abbildung durch optische Elemente wie Linsen oder gekrümmte Spiegel erforderlich ist, ist der Schärfentiefebereich mit diesem Meßverfahren prinzipiell unbegrenzt.

Aus den Koordinate(n) des Lichtflecks in der Sensorrichtung (bei 1-dimensionalen Sensoren) bzw. in der Detektorebene (bei 2-dimensionalen Detektoren), kann bei einer telezentrischen Beleuchtung die Position der retroreflektierenden Marke in einer (Richtung bzw.) Ebene senkrecht zur optischen Achse bestimmt werden. Bei divergenter oder konvergenter Beleuchtung können jeweils der Strahlwinkel bzw. zwei zueinander senkrechte Strahlwinkel zur optischen Achse ermittelt werden.

Bei Kenntnis der Markengröße und der Abstrahlcharakteristik der Beleuchtungseinheit können ferner über eine Messung der Intensität der von der Marke auf den Sensor reflektierten Strahlung folgende Größen ermittelt werden:

- bei telezentrischer Beleuchtung ein Wert für die Verkippung der retroreflektierenden Marke, da es durch eine Verkippung der Marke zu einer Reduktion der wirksamen Retroreflektorfläche im beleuchteten Meßfeld kommt,
- bei divergenter oder konvergenter Beleuchtung kann der Abstand zwischen der Beleuchtungs- / Detektoreinheit und der Marke bestimmt werden.

Mit divergenter oder konvergenter Beleuchtung sind, wie oben dargestellt, prinzipiell die gleichen Größen meßbar. Der wesentliche Unterschied zwischen diesen Beleuchtungsarten ist, daß im Falle der divergenten Beleuchtung der Meßbereich an der Front des Strahlteilers beginnt, während im Falle eines konvergenten Strahlenganges praktisch eine "tote Zone", in der keine sinnvolle Vermessung erfolgen kann, vorhanden ist.

Die Ausführung eines konvergenten Strahlengangs kann trotzdem in folgenden Fällen sinnvoll sein:

1. wenn der gewünschte Meßbereich erst in einem größerem Abstand zur Beleuchtungs- Detektoreinheit beginnt oder

2. wenn sowohl ein Nahbereich vor der Beleuchtungs-/Sensoreinheit, als auch ein Fernbereich, mit jeweils besserer Meßgenauigkeit als im Falle der divergenten Beleuchtung, gewünscht sind.

Vorteilhafte Weiterbildungen der Erfindung sind in den Ansprüchen 2 bis 10 angegeben. Dadurch können folgende Vorteile erzielt werden:

1 . Verbesserung der Robustheit der (Intensitäts-) Messung durch:

- Fremdlichtunterdrückung,
- Unterdrückung von Meßfehlern durch eine Verkippung der Marke,
- Unterdrückung des Einflusses einer Verschmutzung der Marke.

2. Ableitung weiterer Koordinaten des Objekts (Lage der Flächennormale bzw. Achse des Retroreflektors im Raum).

3. Bestimmung der Koordinaten mehrerer Retroreflektoren mit einer Beleuchtungs-Detektoreinheit.

Mittels einer Lochblende, die an dem, der Pupille der Beleuchtung entsprechenden, Ort P' im Detektorstrahlengang angeordnet ist, kann Störlicht wirkungsvoll unterdrückt werden. Meßfehler durch Fremdlicht können vermieden bzw. weiter minimiert werden, wenn die Beleuchtung moduliert und das Sensorsignal gefiltert wird (s. Anspruch 2). Im Falle eines CCD-Sensors (Zeile oder Matrix) wird diese Filterung aus einer Differenzbildung mindestens zweier Bilder oder Scans bestehen, bei Verwendung einer PSD kann diese Filterung beispielsweise aus einer Hochpaß, Bandpaß oder Lock-in-Filterung bestehen.

Wird beispielsweise ein ebener Retroreflektor senkrecht zum einfallenden Strahl verkippt, so ändert sich dadurch die wirksame Fläche im ausgeleuchteten Meßfeld und damit die zurückgestrahlte Intensität. Bei telezentrischer Beleuchtung kann über eine Intensitätsmessung diese Verkippung des Reflektors ermittelt werden. Bei divergenter oder konvergenter Beleuchtung hängt die Intensität von der Verkippung und dem Abstand des Reflektors vom Meßkopf ab.

Wird nach Anspruch 3 ein kugelförmiger Reflektor oder ein als Kugelabschnitt geformter Reflektor verwendet, wird der Einfluß einer Verkippung auf die gemessene Intensität eliminiert, da die wirksame Fläche des Retroreflektors sich bei einer Verkippung nicht ändert. Die Bestimmung des Abstands über eine Messung der auf den Sensor auffallenden Intensität kann dann nicht durch eine Verkippung verfälscht werden.

Durch die erfindungsgemäße Verwendung zweier Beleuchtungseinheiten kann der Einfluß einer Verschmutzung und einer Verkippung des Retroreflektors vermieden werden. Hierbei wird mit zwei unterschiedlichen Beleuchtungen gemessen, deren Quell- bzw. Projektionspunkte in unterschiedlicher Entfernung auf oder zur optischen Achse liegen. Für den Fall zweier Lichtquellen mit gleicher Abstrahlcharakteristik, deren Projektionspunkte auf der optischen Achse in einem Abstand dz liegen sind folgenden Beziehungen (Proportionalitätskonstante $c$, wirksame Fläche des Retroreflektors A und Abstand z zwischen Lichtquelle 1 und Reflektor) gegeben:

$$I1 = \frac{c \cdot A}{z^2} \qquad I2 = \frac{c \cdot A}{(z + dz)^2}$$

Aus den Intensitäten I1 und I2 kann sowohl der Abstand z als auch die Markenfläche A bestimmt werden zu:

$$z = \frac{dz}{\sqrt{I1} - \sqrt{I2}} \qquad und \qquad A = \frac{I1}{c} \cdot \frac{dz^2}{(\sqrt{I1} - \sqrt{I2})^2}$$

Die Bestimmung des Abstands gelingt dadurch auch ohne Kenntnis der Markengröße. Eine Verkippung oder Verschmutzung des Reflektors ist in der Wirkung auf die meßbare Intensität äquivalent zu einer Verkleinerung der Markenfläche. Mit dieser Methode kann daher eine Abstandsmessung erreicht werden, die weder durch Verkippung noch durch Verschmutzung der Marke verfälscht wird und für die eine Kenntnis der Markengröße nicht erforderlich ist. Sofern die Markengröße bekannt und eine Verschmutzung ausgeschlossen ist, kann deshalb zusätzlich aus den gemessenen Intensitäten ein Maß für die Verkippung des Reflektors abgeleitet werden.

Zur Messung der unterschiedlichen Intensitäten gibt es folgende Möglichkeiten:

1. Die unterschiedlichen Beleuchtungen erfolgen gleichzeitig und werden mit einem Sensor erfaßt, der für die verschiedenen Strahlungsarten getrennte Signale (z.B. Farbzeilen- oder Farbmatrix-Sensor) liefert.

2. Die unterschiedlichen Beleuchtungen erfolgen zeitlich nacheinander und werden nacheinander mit dem gleichen Sensor erfaßt.

3. Eine Kombination beider Möglichkeiten kann selbstverständlich ebenfalls benutzt werden und unter Umständen besonders vorteilhaft sein.

Die Schwerpunktskoordinaten des Lichtflecks in der Sensorebene stellen ein Maß für den Winkel in dem sich das Reflektorzentrum, vom Projektionspunkt aus gesehen, befindet. Wird von unterschiedlichen Projektionspunkten aus beleuchtet, so werden jeweils unterschiedliche Schwerpunktskoordinaten in der Sensorebene gemessen. Aus dem Unterschied der Schwerpunktskoordinaten kann daher der Abstand des Reflektors bestimmt werden. Diese Abstandsbestimmung kann alternativ oder ergänzend zur Abstandsmessung mittels der Intensität erfolgen.

Eine weitere alternative Meßmethode zur Bestimmung des Abstands ist eine gleichzeitige Vermessung der Strahlwinkel mit mehreren, an verschiedenen Referenzpunkten angebrachten, Beleuchtungs- / Detektoreinheiten. Da das von jeder Beleuchtungseinheit auf den Retroreflektor auftreffende Licht in sich zurückreflektiert wird, erfolgt keine gegenseitige Beeinflussung (wie sie beispielsweise bei der Vermessung mit Verfahren nach A. auftreten würde). Die Reflektorkoordinaten sind damit über eine Triangulationsrechnung aus den gemessenen Strahlwinkeln ableitbar.

Mit einer weiteren Weiterbildung können mehrere retroreflektierende Marken auch mit einem positionsauflösenden, aber nicht bildgebenden Sensor, (z.B. einer PSD) vermessen werden. Bestehen die Marken aus Retroreflektoren, vor denen beispielsweise jeweils unterschiedliche Farbfilter angebracht sind und werden diese Marken mit Licht aus entsprechenden Spektralbereichen beleuchtet, kann erreicht werden, daß praktisch jeweils nur eine der Marken das Licht einer Strahlungsart reflektiert. Eine Trennung wird ermöglicht durch:

- die zeitlich aufeinanderfolgende Beleuchtung mit den unterschiedlichen Strahlungsarten,
- die Verwendung eines oder mehrerer farbempfindlicher Sensoren,
- die Aufteilung des Detektorstrahlengangs in mehrere Teilstrahlengänge zu Detektoren, die unterschiedlich auf die einzelnen Strahlungsarten ansprechen,
- eine wellenlängenselektive Strahlteilung oder
- die Aufteilung des Detektorstrahlengangs in mehrere unterschiedlich gefilterte Teilstrahlengänge zu den einzelnen Detektoren.

Die einzelnen Möglichkeiten können praktisch beliebig miteinander kombiniert werden. Ferner kann anstelle einer Unterscheidung mittels der Farbe bzw. Wellenlänge eine Unterscheidung durch den Polarisationszustand erfolgen.

Der Vorteil einer entsprechenden Ausführung liegt in der damit möglichen Steigerung der Meßfrequenz. Eine Alternative zu dieser Methode ist die Vermessung mit einem bildgebenden Sensor (CCD-Matrix). Die damit erreichbare Meßfrequenz liegt in der Größenordnung 10 Hz. Demgegenüber kann die Vermessung mehrerer Punkte bereits mit positionsauflösenden Sensoren (z.B. PSD) erfolgen, mit denen Meßfrequenzen im MHz-Bereich erreichbar sind. Beispielsweise können dann zwei retroreflektierende Marken am Ursprung und an der Spitze einer Roboterhand befestigt werden. Mit diesen Meßsystemen kann dann die Bahn- und Richtungsgenauigkeit selbst extrem schneller Roboter vermessen werden.

Wird auf einer relativ ausgedehnten Marke (Ausdehnung größer als etwa das 10-fache der Auflösung des Meßbereichs durch den Sensor und kleiner 100% der im Meßfeld ausgeleuchteten minimalen Fläche) ein oder mehrerer Verlaufsfilter angeordnet, d.h. Filter die zu einem Verlauf der zurückreflektierten Intensität über eine oder beide Richtungen der Markenfläche führen, so kann die Verkippung der Markenfläche bereits mit positionsauflösenden Detektoren bestimmt werden. Als Meßeffekt wird dabei ausgenutzt, daß bei der Beleuchtung mit den unterschiedlichen Strahlungsarten abweichende Schwerpunktskoordinaten in der Sensorebene ermittelt werden. Aus der Differenz dieser Schwerpunkte kann die Verkippung ermittelt und ggf. der aus der Verkippung resultierende Fehler der Abstandsmessung kompensiert werden.

Ist beispielsweise auf der Marke ein von blau nach rot verlaufender Farbfilter angebracht, so wird die ermittelte mittlere Position der Marke bei der Beleuchtung mit blauem Licht gegenüber derjenigen, die bei der Beleuchtung mit rotem Licht bestimmt wird, verschoben sein. Für eine senkrecht zur optischen Achse des Sensors ausgerichtete Marke ist der Abstand der Lichtfleck-Schwerpunkte in der Sensorebene nur vom Abstand zum Meßkopf abhängig bzw. (mit einer telezentrischen Beleuchtung) konstant. Durch eine Verkippung der Marke um die Achse senkrecht zur optischen Achse und senkrecht zum Farbverlauf, kommt es zu einer Reduzierung dieses gemessenen Abstands. Ist der Verlauf des Abstands (für eine Verkippung) im Meßbereich bekannt oder wird er für die Marke einmal vermessen, so kann über eine Vermessung dieses Abstands die Verkippung der Marke bestimmt werden.

Wie oben beschrieben sind für das Meßprinzip keine abbildenden optischen Elemente wie Linsen oder Spiegel erforderlich. Eine Benutzung derartiger Elemente kann trotzdem sinnvoll sein, um eine Anpassung des Abbildungsmaßstabs an die Meßaufgabe oder die Sensorgröße bzw. eine Optimierung, Variation oder Verbesserung der Empfindlichkeit des Systems zu erreichen.

## Kurze Beschreibung eines Ausführungsbeispiels

Die einzige Figur zeigt eine Ausführung der Erfindung, bei der der Beleuchtungsstrahlengang in Teilstrahlengänge aufgespalten ist, die zeitlich unterschiedlich modulierbar sind. Im dargestellten Beispiel ist die Lichtquelle (beispielsweise eine Mehrfarben-Leuchtdiode) mit (6) bezeichnet. Im Strahlengang direkt hinter ihr befindet sich ein Diffusor (7), der beispielsweise aus einem Hologramm besteht. Die davon ausgehende Strahlung ist ein homogen ausgeleuchteter Lichtkegel 1 (durchgezogene Linien). Sie gelangt über den Strahlteiler (11), an dem das Licht einer gleichartigen Beleuchtung (6',7') eingekoppelt wird, die sich vom Außenraum aus gesehen auf einer anderen Position auf bzw. senkrecht zur optischen Achse befindet und einen anderen Öffnungswinkel aufweist (gestrichelte Linie). Von dort gelangt die Strahlung über den Strahlteiler (3), zur Einspiegelung der Beleuchtung in den Objektraum, schließlich teilweise auf die im Meßfeld befindliche Marke 4. Ein anderer Teil gelangt auf die Marke 4'. Jede Marke wirkt wie eine Kombination eines (idealen) Retroreflektors mit einem jeweils unterschiedlichen Farbfilter. Beispielsweise wirkt Marke 4 im roten Spektralbereich als Retroreflektor und absorbiert im grünen Spektralbereich. Die Marke 4' wirkt genau umgekehrt. Die auf diese Marken treffende Strahlung wird in den Meßkopf zurückreflektiert. Ein Teil dieser Strahlung gelangt über den Strahlteiler (3) zum Detektor (5) (beispielsweise eine PSD). Wird beispielsweise zeitlich nacheinander zunächst mit der Beleuchtungseinheit (6,7) anschließend mit Beleuchtungseinheit (6',7') jeweils rotes und anschließend grünes Licht emittiert, kann bereits mit einer PSD allein eine sehr robuste, d.h. von der Verkippung, der Verschmutzung und der Markengröße unabhängige Vermessung der 3D-Koordinaten beider Marken erfolgen. Aus diesen beiden Markenpositionen kann eindeutig die Position und Ausrichtung des Objekts im Raum bestimmt werden. Eine Verdopplung der Meßfrequenz kann mittels eines zusätzlichen wellenlängenselektiven Strahlteilers (12) und einer zweiten PSD (13) erfolgen, da dann beide Leuchtdioden gleichzeitig (mit jeweils unterschiedlicher Farbe) betrieben werden können.

## Patentansprüche

1. Anordnung zur Vermessung der Koordinaten mindestens eines, an einem Objekt angebrachten Retroreflektors, bei der

   - eine Beleuchtungseinheit vorgesehen ist, die Licht in Form eines Strahlenbündels über einen Strahlteiler derart auf die Objektoberfläche richtet, dass das Strahlenbündel eine größere Fläche als die Fläche des mindestens einen, auf der Objektoberfläche angebrachten Retroreflektors beleuchtet,
   - vom Retroreflektor in sich zurückgeworfenes Licht am Strahlteiler vom Beleuchtungsstrahlengang getrennt wird, und
   - dieses Licht auf eine Detektoreinheit auftrifft, mit der die Auftreffposition des detektierten Lichtflecks ermittelbar ist,

   **dadurch gekennzeichnet,**

   - **daß** sich die Detektoreinheit außerhalb eines Punktes P' befindet, der einem, der Pupille der Beleuchtungseinheit entsprechenden Punkt im Strahlengang des vom Retroreflektor zurückgeworfenen Lichts entspricht, wo sich die Position und/oder Form des detektierten Lichtflecks mit der Position des Retroreflektors ändert, und

- **daß** die Beleuchtungseinheit aus zwei oder mehreren Lichtquellen mit unterschiedlicher Pupillenlage besteht, die zeitlich abwechselnd betätigbar sind und/oder in der spektralen Zusammensetzung oder im Polarisationszustand unterschiedliches Licht emittieren.

2. Anordnung nach Anspruch 1,
   **gekennzeichnet durch** Mittel zur Modulation des Lichts der Beleuchtungseinheit und zur Filterung des Signals der Detektoreinheit und/oder **durch** eine Blende (8) am Ort der Pupille P'.

3. Anordnung nach Anspruch 1 oder 2,
   **dadurch gekennzeichnet, dass** der Retroreflektor als Kugel oder Kugelabschnitt ausgebildet ist und/oder aus einer retroreflektierenden Folie oder Schicht besteht.

4. Anordnung nach einem der Ansprüche 1 bis 3,
   **dadurch gekennzeichnet, dass** der Detektor eine Mattscheibe, ein Film, eine Fotodiode, ein positionsauflösender Sensor oder bildauflösender Sensor in Art einer CCD-Zeile, Farbzeile, CCD-Matrixsensor oder CCD-Farbmatrixsensor ist.

5. Anordnung nach Anspruch 1,
   **dadurch gekennzeichnet, dass** die Detektoreinheit einen für die unterschiedlichen Beleuchtungsarten geteilten Sensor, z.B. in Form eines Farbzeilen- oder Farbmatrix-Sensors, aufweist.

6. Anordnung nach Anspruch 1 oder 5,
   **dadurch gekennzeichnet, dass** zwei oder mehrere Retroreflektoren mit wellenlängenselektiven oder polarisationsabhängigem Reflexionsverhalten vorgesehen sind.

7. Anordnung nach einem der Ansprüche 1 bis 7,
   **dadurch gekennzeichnet, dass** die Retroreflektorfläche mehr als etwa 10% der ausgeleuchteten Fläche auf der Objektoberfläche beträgt und ein oder mehrere Filter auf der Retroreflektorfläche angebracht sind, die zu einer Änderung der zurückreflektierten Intensität in Abhängigkeit vom Spektralbereich oder vom Polarisationszustand der beleuchtenden Strahlung über eine oder zwei Richtungen der Reflektoroberfläche führen.

8. Anordnung nach einem der Ansprüche 1 bis 7,
   **dadurch gekennzeichnet, dass** abbildende optische Elemente, insbesondere Linsen, Hohl- oder Parabolspiegel, in einzelnen Teilstrahlengängen angeordnet sind.

9. Anordnung zur Erfassung von Objekten, bei der mehrere der Anordnungen nach einem der Ansprüche 1 bis 8 auf der Objektoberfläche ausgerichtet sind.

10. Verwendung der Anordnung nach einem der Ansprüche 1 bis 9 zur statischen oder dynamischen Vermessung der Genauigkeit von Robotern, zur Überwachung der Maßhaltigkeit oder der Flugbahn von Objekten, der Orts- oder Lageveränderung von Objekten oder der Orts- oder Lageveränderung von Körperteilen.

**Claims**

1. Arrangement for the determination of the coordinates of at least one retro reflector mounted on an object, wherein

   - an illumination unit is provided that directs the light in the form of a pencil of rays via a beam splitter onto the object surface in such a way that the pencil of rays illuminates an area that is larger than the area of said at least one retro reflector mounted on the object surface,
   - light reflected back in itself by said retro reflector is separated from the optical illuminating path on said beam splitter, and
   - this light is incident on a detector unit suitable for determining the position of incidence of the detected light spot,

   **characterised in**

   - **that** said detector unit is located beyond a point P' that corresponds to a point in the optical path of the light reflected by said retro reflector, which corresponds to the pupil said illumination unit, where the position and/or the shape of the detected light spot varies as the position of said retro reflector varies, and
   - **that** said illumination means consists of two or more sources of light with different pupil positions, which are adapted to be operated in chronological alternation and/or which emit light different in terms of the spectral composition or in terms of the polarisation state.

2. Arrangement according to Claim 1,
   **characterised by** means for modulating the light of said illumination unit and for filtering the signal of the detector unit and/or by a diaphragm (8) at the site of said pupil P'.

3. Arrangement according to Claim 1 or 2,
   **characterised in that** said retro reflector is configured as a sphere and/or consists of a retro reflective film or layer.

4. Arrangement according to any of the Claims 1 to 3,

**characterised in that** said detector is a ground-glass screen, a film, a photodiode, a position-resolving sensor or an image-resolving sensor of the type of a CCD line, a colour line, a CCD matrix sensor or a CCD colour matrix sensor.

5. Arrangement according to Claim 1, **characterised in that** said detector unit comprises a sensor subdivided for the different types of illumination, e.g. in the form of a colour line or colour matrix sensor.

6. Arrangement according to Claim 1 or 5, **characterised in that** two or more retro reflectors with a wavelength-selective or polarisation-dependent reflection behaviour are provided.

7. Arrangement according to any of the Claims 1 to 7, **characterised in that** the retro reflector surface corresponds to more than roughly 10 % of the illuminated area on said object surface and that one or several filters are mounted on the retro reflector surface, which result in a change of the retro reflected intensity as a function of the spectral range or of the polarisation state of the illuminating radiation along one or two directions of the reflector surface.

8. Arrangement according to any of the Claims 1 to 7, **characterised in that** imaging optical elements, particularly lenses, concave mirrors or parabolic reflectors are disposed in individual partial optical paths.

9. Arrangement for determining objects, wherein several arrangements according to any of the Claims 1 to 8 are oriented on the object surface.

10. Application of the arrangement according to any of the Claims 1 to 9 for the static or dynamic determination of the accuracy of robots, for monitoring the dimensional stability or the fight trajectory of objects, the changes of the site or the position of objects or the change of the site or position of parts of the body.

**Revendications**

1. Arrangement à relever les coordonnées d'au moins un rétro réflecteur monté sur un objet, dans lequel

- une unité d'éclairage est disposée, qui dirige la lumière sous forme d'un cône de rayons via un élément séparateur optique sur la surface de l'objet d'une manière, que le cône de rayons éclaire une aire, qui est plus grande que l'aire dudit au moins un rétro réflecteur monté sur la surface de l'objet,

- la lumière réfléchie en retour en elle-même par ledit rétro réflecteur est séparée de la marche des rayons d'éclairage sur ledit élément séparateur optique, et

- cette lumière est incidente sur une unité détectrice capable de relever la position d'incidence du spot lumineux détecté,

**caractérisé en ce**

- **que** ladite unité détectrice se trouve en dehors d'un point P', qui correspond à un point dans la marche des rayons de la lumière réfléchie par ledit rétro réflecteur, qui correspond à la pupille de ladite unité d'éclairage, où la position et/ou la forme du spot lumineux détecté varie, quand la position dudit réflecteur varie, et

- **en ce que** ledit moyen d'éclairage consiste en deux oui plus sources lumineuses aux positions de pupille différentes, qui sont capables de fonctionner en succession chronologique et/ou qui émettent de la lumière différente en composition spectrale ou en état de polarisation.

2. Arrangement selon la revendication 1, **caractérisé par** un moyen de modulation de la lumière de ladite unité d'éclairage et de filtrage du signal de l'unité détectrice et/ou par un diaphragme (8) au points de ladite pupille P'.

3. Arrangement selon la revendication 1 ou 2, **caractérisé en ce que** ledit rétro réflecteur est configuré sous forme d'une sphère et/ou consiste en un film rétro réflectif ou une couche rétro réflective.

4. Arrangement selon une quelconque des revendications 1 à 3, **caractérisé en ce que** ledit détecteur est un verre dépoli, un film, une photodiode, un détecteur à résolution de position ou un détecteur à résolution d'images du type à lignes CCD, un détecteur à matrice CCD ou un détecteur à matrice en couleurs CCD.

5. Arrangement selon la revendication 1, **caractérisé en ce que** ladite unité détectrice comprend un détecteur séparé pour les types différents d'éclairage, par exemple sous forme d'un détecteur à lignes en couleurs ou d'un détecteur à matrice en couleurs.

6. Arrangement selon la revendication 1 ou 5, **caractérisé en ce que** deux ou plus rétro réflecteurs à comportement en réflexion, sélectifs en longueur d'onde ou dépendants de polarisation, sont disposés.

7. Arrangement selon une quelconque des revendications 1 à 7,
**caractérisé en ce que** la surface du rétro réflecteur correspond à plus que 10 % environ de l'aire éclairée sur ladite surface de l'objet, et **en ce qu'**un ou plusieurs filtre(s) est/sont disposé(s) sur la surface du rétro réflecteur, qui résultent en une variation de l'intensité rétro réfléchie en fonction de la gamme spectrale ou de l'état de polarisation du rayonnement d'éclairage le long une ou les deux directions de la surface du réflecteur.

8. Arrangement selon une quelconque des revendications 1 à 7,
**caractérisé en ce que** des éléments optiques d'images, en particulier des lentilles, des réflecteurs de concentration ou des réflecteurs paraboliques sont disposés dans des marches des rayons sectionnées individuelles.

9. Arrangement à relever des objets, dans lequel plusieurs arrangements selon une quelconque des revendications 1 à 8 sont orientés sur la surface de l'objet.

10. Application de l'arrangement selon une quelconque des revendications 1 à 9 pour le mesurage statique ou dynamique de la précision des robots, pour le monitorage de la stabilité dimensionnelle ou de la trajectoire des objets, les variations du lieu ou de la position des objets ou la variation du lieu ou de la position of parts du corps.